(19) Europäisches Patentamt
European Patent Office
Office européen des brevets

(11) **EP 4 525 250 A1**

(12) **EUROPEAN PATENT APPLICATION**

(43) Date of publication:
**19.03.2025   Bulletin 2025/12**

(21) Application number: **23382936.5**

(22) Date of filing: **14.09.2023**

(51) International Patent Classification (IPC):
*H02J 3/24* (2006.01)    *F03D 7/04* (2006.01)
*G05F 1/66* (2006.01)    *H02J 3/38* (2006.01)

(52) Cooperative Patent Classification (CPC):
**H02J 3/381; F03D 7/0272; F03D 7/0284;**
**H02J 3/24;** F05B 2270/337; H02J 2300/28

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Siemens Gamesa Renewable Energy
Innovation &
Technology S.L.
31621 Sarriguren (Navarra) (ES)**

(72) Inventor: **The designation of the inventor has not
yet been filed**

(74) Representative: **SGRE-Association
Siemens Energy Global GmbH & Co. KG
SE I IM P Intellectual Property
Siemenspromenade 9
91058 Erlangen (DE)**

(54) **OPERATION OF A POWER CONVERTER INTERFACED POWER GENERATION SYSTEM OF A WIND TURBINE**

(57)    A method of controlling the operation of a power converter of a power generation system is provided. The power generation system (100) may be electrically coupled to a power grid (150) to provide electrical power generated by the power generation system (100) to the power grid and the power converter (105) may control an output power of the power generation system (100). The method (500) may operate the power converter (105) in an impedance compensating mode. The impedance compensating mode may comprise monitoring (S710) a parameter indicative of a grid voltage of the power grid (150), applying (S720) a compensating transfer function (215, 235) to the monitored parameter ($u_g$) to generate a modification parameter ($u_v$) and modifying (S730) a control (210, 230) of the power converter (105) by applying the modification parameter ($u_v$) to a control parameter of the control of the power converter (105). The compensating transfer function (215, 235) may be configured to reduce a reactance of an output impedance of the power generation system (100) to provide a compensated output impedance of the power generation system.

FIG 1

EP 4 525 250 A1

**Description**

FIELD OF THE INVENTION

The present invention relates to a method of controlling the operation of a power converter of a power generation system. It further relates to a computer program and a computer-readable medium for performing such method. It further relates and a control system configured to perform such method and a power generation system comprising such a control system.

BACKGROUND

In recent years, the integration power generation systems that are coupled to the power grid via a power converter has led to an increased emergence of harmonic resonances.

Depending on the capabilities to damp the harmonic resonances in the power grid, the harmonic resonances may result in grid disturbances, such as overvoltage or overcurrent conditions.

Accordingly, especially in poorly damped or undamped power grids, which have a relatively low damping capability, the harmonic resonances may become problematic.

Due to the disturbances, the harmonic resonances may destabilize converter-interfaced power generation systems coupled to the power grid during operation or may, in dependance on the severity, even damage them.

To reduce grid disturbances caused by harmonic resonances, damping passive or active power filters are therefore integrated in a power grid today. However, the use of the filters is accompanied by the need of additional hardware, implementation and maintenance effort, and thus accompanied by increased costs.

Moreover, the control of converter-interfaced power generation systems may be designed to react when a harmonic resonance arises. However, the today known algorithms often cannot guarantee a stable operation of the systems over a wide range of operating conditions, e.g. due to a lack of knowledge of the physical systems underlying a model-based design of the algorithms.

SUMMARY

Accordingly, there is the need to mitigate at least some of the drawbacks mentioned above and to improve the stability margins of operating a power-grid coupled power converter of a power generation system and to improve the robustness of the power converter against grid disturbances, in particular against grid disturbances caused by harmonic resonances.

This need is met by the features of the independent claims. The dependent claims describe embodiments of the invention.

According to an aspect of the invention, a method of controlling the operation of a power converter of a power generation system is provided. The power generation system is electrically coupled to a power grid to provide electrical power generated by the power generation system to the power grid and the power converter controls an output power of the power generation system. The method operates the power converter in an impedance compensating mode. The impedance compensating mode comprises monitoring a parameter indicative of a grid voltage of the power grid, applying a compensating transfer function to the monitored parameter to generate a modification parameter and modifying a control of the power converter by applying the modification parameter to a control parameter of the control of the power converter. The compensating transfer function is configured to reduce a reactance of an output impedance of the power generation system to provide a compensated output impedance of the power generation system.

The method allows modifying the control of the power converter based on the monitored grid voltage such that the actual output impedance of the power generation system is changed by a reduction of its reactance. With the reduced reactance, an active interaction of the power generation system with the power grid may be reduced, so that a contribution, in particular an enhancing contribution, of the power generation system to the harmonic resonance may at least be weakened. Accordingly, the stability of the operation of the power generation system may be improved. Since providing the compensated output impedance is achieved by only modifying the control that is already present in the power generation system, the solution may require a reduced hardware, implementation and maintenance effort.

A power converter described herein may be configured to convert electrical power. The power converter may be configured to convert alternating current into direct current and vice versa, or AC to AC. The power converter may change voltage and/or frequency of the current.

Monitoring may for example be performed - but is not limited to - by means of at least one of a sensor, a sensing system, a model, in particular a mathematical and/or physical model, being implemented in software, and a filter-based monitoring system, which may for example be a state observer, Kalman filter or the like. The result of monitoring a parameter may be a signal of the monitored parameter, e.g., a discrete or continuous signal that indicates a progression of the monitored parameters by plural values generated by the monitoring. Monitoring may further comprise signal pre- and postprocessing, e.g. filtering. Further, monitoring may utilize information obtained from hardware that is implemented for the purpose of monitoring, e.g. one or more sensors, and/or may utilize information obtained from hardware that is implemented for another purpose. Monitoring may further comprise an estimating and/or predicting, preferably based on obtained information.

A transfer function herein may model a relation that provides an output signal in response to an input signal provided to the transfer function. A transfer function herein may be a function depending on a complex variable, e.g. Laplace variable s=jw, or independent of the complex variable, e.g. a frequency independent value having a real and/or imaginary part, as for example a real or complex gain.

The parameter indicative of the grid voltage may for example be a voltage monitored at a point of common coupling between the power grid and the power generation system.

The control of the power converter being modified may for example be a current control of the power converter.

Preferably, the transfer function is configured to reduce the reactance of the output impedance of the power generation system at one or more frequencies. Preferably, the one or more frequencies comprise one or more resonant frequencies of the power grid, in particular of high-frequency resonances (e.g. one or more frequencies from a range between 40 Hz and 100 kHz, in particular between 40 Hz and 10 kHz), e.g. a frequency of an occurring harmonic resonance.

The one or more frequencies may be predetermined and/or be one or more discrete frequencies.

Operating the power converter in impedance compensating mode may further comprise controlling the power converter using the modified control.

In an example, the power grid may be a low or poorly damped or even (substantially) undamped power grid, e.g. an island grid or micro grid. The power grid may in particular be a power grid that has poorly damped or insufficiently damped modes. For example, system eigenvalues of the power grid may be close to or adjacent to the imaginary axis. The power grid may thus be a power grid in which fast interactions between converters may occur, resulting in harmonics or modes at a respective frequency, which may be reduced by the method.

In particular, the reactance may be configured to at least partially compensate the reactance of the output impedance to reduce the reactance.

The reactance of the output impedance may be reduced so that the compensated output impedance is substantially only resistive.

Since the resulting compensated output impedance may be substantially only resistive, i.e. the reactance of the output impedance of the power generation system is reduced to substantially zero, the power generation system responds on a grid harmonic like a passive component and, thus, may not actively contribute to the harmonic resonance but have an energy dissipating influence. In other words, the substantially only resistive compensated output impedance may provide a stable response damping the harmonic resonance. Since the compensated output impedance is substantially only resistive, the power generation system may also be robust against a wide range of frequencies at which the harmonic resonances occur. Accordingly, the stability of the operation of the power generation system is further improved.

The power generation system may comprise one or more power generation units to provide at least a part of the electrical power generated by the power generation system. A power generation unit may be an electrical power generator, for example an electrical power generator of a wind turbine, e.g. a type-III wind turbine, in particular an asynchronous or synchronous generator, e.g. a wound rotor induction generator, or a photovoltaic system or an energy storage system. Preferably, the asynchronous generator may be provided with the power converter in a doubly fed induction generator topology and the synchronous generator may be provided with the power converter in a full-converter topology.

In an example, the power generation system may comprise the electrical power generator of the wind turbine. The power converter may comprise a rotor side converter configured to be electrically coupled to a rotor of the generator, and/or the power converter may comprise a grid side converter configured to be electrically coupled to the power grid. The method may comprise operating the rotor side converter and/or the grid side converter in the impedance compensating mode.

Since the impedance compensating mode may be performed by the rotor side converter, the grid side converter or both these converters, a degree of freedom is provided that may improve flexibility of controlling the power generation system, e.g. with respect to computation load and electrical power load during operation of the converters, and that may furthermore simplify control design.

In an example, the method may comprise deriving the compensating transfer function from at least one of a transfer function that relates a voltage, e.g. a reference voltage, of the power converter with an output current of the power converter, a transfer function of a current controller of the power converter, a transfer function indicating an open-loop admittance of the power converter, and a predetermined resistance that is to be provided by the compensated output impedance at the one or more frequencies. Alternatively, the method may comprise deriving the compensating transfer function from at least one of a transfer function that relates a reference current of the power converter with an output current of the power converter, a transfer function indicating a closed-loop admittance of the power converter, and the predetermined resistance that is to be provided by the compensated output impedance at the one or more frequencies. In a particular example, the predetermined resistance is to be provided by the compensated output impedance at one of plural frequencies and one or more different predetermined resistances are to be provided by the compensated output impedance at associated one or more remaining frequencies of the plural frequencies, respectively.

In an example, the method may comprise identifying the transfer function that relates the reference current of the power converter with the output current of the power converter, and/or identifying the transfer function indicating the closed-loop admittance of the power converter. Preferably, identifying the transfer function indicating the closed-loop admittance of the power converter comprises disturbing voltage at the point of common coupling, monitoring, in particular measuring, the output current of the power generation system, and deriving the closed-loop admittance from at least the disturbed voltage and the monitored output current. For example, the identifying may include stimulating the transfer function at an input of the transfer function by applying an input signal and monitoring an output signal output in response to the stimulating, and the transfer function may be identified based on the input signal and the monitored output signal.

In an example, the power converter comprises the grid side converter and the rotor side converter. The method may comprise identifying the closed-loop admittance of the grid side converter while the impedance compensating mode is operated on the rotor side converter.

The rotor side control may affect the grid side control, e.g. due to a coupling introduced by a DC-link voltage control. Contrarily, the grid side control usually may not affect the rotor side control. Accordingly, identifying the closed-loop admittance of the grid side converter while the impedance compensating mode is already operated on the rotor side converter may consider the influence of the rotor side converter on the grid side converter and improve the identification results and, thus, the control performance.

In an example, the predetermined resistance is to be provided by the compensated output impedance at plural frequencies and the derived compensating transfer function is derived from the predetermined resistance. The method may comprise deriving for each frequency of the plural frequencies an intermediate compensating transfer function that is configured to reduce the reactance of the output impedance of the power converter at the frequency and applying a fitting algorithm to the derived plural intermediate compensating transfer functions to derive the compensating transfer function. In particular, the fitting algorithm may be a rational fitting and passivity enforcement algorithm, and even more particular a vector fitting algorithm.

Considering plural frequencies of the grid voltage at which the predetermined resistance is to be provided is beneficial since it provides a robust system operation over a wider frequency range and, thus, even more improves the stability margins of the system.

The compensating transfer function may be a parametric transfer function that is derived from applying the fitting algorithm to plural points of a desired frequency response of the parametric transfer function and at least a part of the frequency response points may be set by the intermediate compensating transfer functions. Preferably, the plural frequency response points may further comprise a frequency response point with a low gain at high-frequency and/or a frequency response point with zero gain at a system nominal frequency.

The low gain-high frequency response point may ensure that the compensating transfer function does not amplify high-frequency noise and the zero gain-nominal frequency response point may ensure that the compensating transfer function is not active at the frequency of the synchronous resonance (50 Hz in dq coordinates, 0 Hz in natural coordinates).

In an example, the compensating transfer function may comprise a transfer function derived from applying the fitting algorithm and a low pass filter in series with the transfer function derived from applying the fitting algorithm.

The low-pass filter may ensure a decaying gain in the high-frequency range.

In an example, the control parameter may be a reference voltage, in particular for a pulse-width modulation, of the power converter, and preferably the modification parameter may be a voltage parameter and the modifying may comprise adding the voltage parameter to the reference voltage.

Operating the power converter in the impedance compensating mode may further comprise generating the reference voltage by a current controller.

In an example, the control parameter may be a reference current of the power converter, and preferably the modification parameter may be a current parameter and the modifying may comprise adding the current parameter to the reference current of the current controller of the power converter.

In an example, the compensating transfer function may comprise one or more elements, wherein the one or more elements comprise at least one of a high-pass filter, a low-pass filter, a lead-lag compensator, and a module compensator. Preferably, the elements are connected in series.

Additionally or alternatively, the compensating transfer function may comprise a fitted transfer function that is derived by fitting a parametric transfer function to plural points of a desired frequency response of the parametric transfer function. Preferably, the parametric transfer function may have a form of

$$Y(s) \approx \sum_{i=1}^{n} \frac{R_i}{s - \lambda_m} + D + sE$$

wherein $\lambda_m$, $R_i$, D and E are system eigenvalues, residues, and matrices of a rational function approximation, respectively.

According to an aspect of the invention, a control system for controlling the operation of a power converter of a power generation system is provided. The power generation system is configured to be electrically coupled to a power grid to provide electrical power generated by the power generation system to the power grid and the power converter is configured to control an output power of the power generation system. The control system is configured to perform any of the methods described herein.

For this purpose, the control system may for example include a processing unit and a memory unit, the memory unit storing control instructions which when executed by the processing unit of the control system, cause the control system to perform any of the methods described herein.

According to an aspect of the invention, a power generation system is provided. The power generation system is configured to be electrically coupled to a power grid to provide electrical power generated by the power generation system to the power grid. The power generation system comprises a power converter, wherein the power converter is configured to control an output power of the power generation system, and any of the control systems described herein, wherein the control system is configured to be coupled to the power converter to control the operation of the power converter.

According to an aspect of the invention, a computer program for controlling the operation of a power converter of a power generation system is provided. The power generation system is configured to be electrically coupled to a power grid to provide electrical power generated by the power generation system to the power grid and the power converter is configured to control an output power of the power generation system. The computer program comprises control instructions which, when executed by a processing unit of a control system controlling the operation of the power converter, cause the processing unit to perform any of the methods described herein. The computer program may be provided on a volatile or nonvolatile storage medium or data carrier.

A computer-readable medium comprising instructions for controlling the operation of a power converter of a power generation system is provided. The power generation system is configured to be electrically coupled to a power grid to provide electrical power generated by the power generation system to the power grid and the power converter is configured to control an output power of the power generation system. The instructions, when executed by a processing unit of a control system controlling the operation of a power converter, cause the processing unit to perform any of the methods described herein.

A processing unit herein may for example include a digital signal processor, an application specific integrated circuit, a field programmable gate array, a microprocessor, or the like. A memory unit herein may for example include RAM, ROM, Flash Memory, a hard disk drive and the like.

It is to be understood that the features mentioned above and those yet to be explained below can be used not only in the respective combinations indicated, but also in other combinations or in isolation, without leaving the scope of the present invention. In particular, the features of the different aspects and embodiments of the invention can be combined with each other unless noted to the contrary.

Further, any of the herein described aspects and embodiments of the invention may comprise any of the features described in the document "Virtual-Admittance Control Method for Guaranteeing Stability of Type-III Wind Turbines Connected to Poorly Damped Power Networks" by the authors Pablo Rodriguez-Ortega, Javier Roldán-Pérez and Milan Prodanovic. Thus, the content of the document "Virtual-Admittance Control Method for Guaranteeing Stability of Type-III Wind Turbines Connected to Poorly Damped Power Networks" is hereby incorporated in this application by reference.

BRIEF DESCRIPTION OF THE DRAWINGS

The foregoing and other features and advantages of the invention will become further apparent from the following detailed description read in conjunction with the accompanying drawings. In the drawings, like reference numerals refer to like elements.

Fig. 1 is a schematic drawing illustrating a power generation system according to an exemplary implementation.

Fig. 2 is a schematic drawing showing the power generation system and a signal flow illustrating an impedance compensating mode being performed by both a rotor side converter and a grid side converter of the power generation system according to an exemplary implementation.

Fig. 3 is a schematic drawing which shows, according to an exemplary implementation, a signal flow chart of a model of a current control of a converter and corresponding simplified models thereof, the current control including a virtual admittance loop with a compensating transfer function.

Fig. 4 is a schematic flow diagram illustrating a method of designing compensating transfer functions according to an exemplary implementation.

Fig. 5 is a schematic diagram illustrating, according to an example, a frequency domain stability analysis of the grid-coupled power generation system with the compensating transfer function designed for a single frequency compensation by applying the generalized Nyquist stability criterion.

Fig. 6 is a schematic diagram illustrating, according to an example, a frequency domain stability analysis of the grid-coupled power generation system with the compensating transfer function designed for a frequency range compensation by applying the generalized Nyquist stability criterion.

Fig. 7 is a schematic flow diagram illustrating a method of controlling the operation of a power converter of a power generation system according to an exemplary implementation.

DETAILED DESCRIPTION

In the following, embodiments of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

It should be clear that the described hereinbelow with respect to a converter-interfaced power generator of a wind turbine may correspondingly apply to a different type of converter-interfaced power generating units, e.g. to a photovoltaic system or an energy storage system.

Unless otherwise noted or otherwise indicated by the context, the following notation is used in the figures. Electrical variables are noted in lower-case (e.g., $u_c$). Variables in a synchronous reference frame (dq-frame) are noted with an arrow over the variable name whenever needed. Signals in the Laplace domain are noted in lower case and boldface (e.g., $\mathbf{u_c}(s) = [u_{c\text{-}d}(s)\, u_{c\text{-}q}(s)]'$), wherein ' stands for transpose. Matrices of transfer functions are noted with upper-case boldface symbols (e.g., $\mathbf{Y_v}(s)$). Moreover, the variable s stands for the complex variable, although it is omitted whenever possible to simplify the notation.

Herein, "rsc" refers to rotor side converter and "gsc" refers to grid side converter, unless otherwise noted or otherwise indicated by the context.

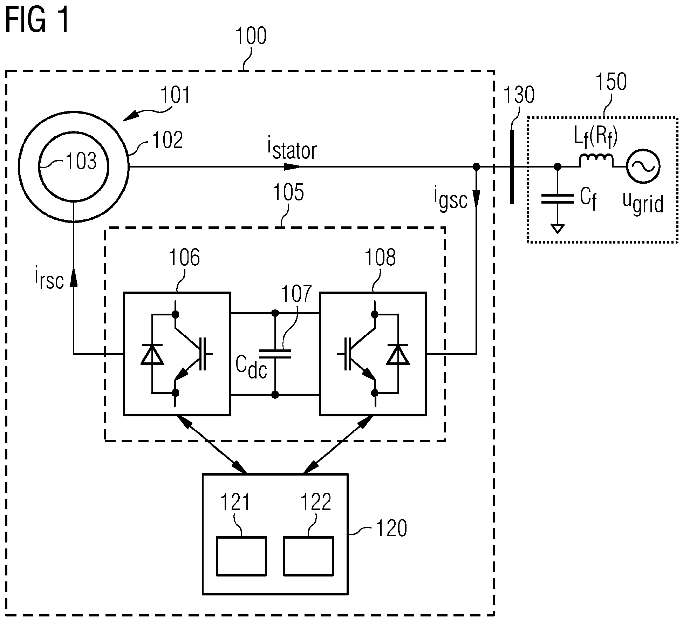

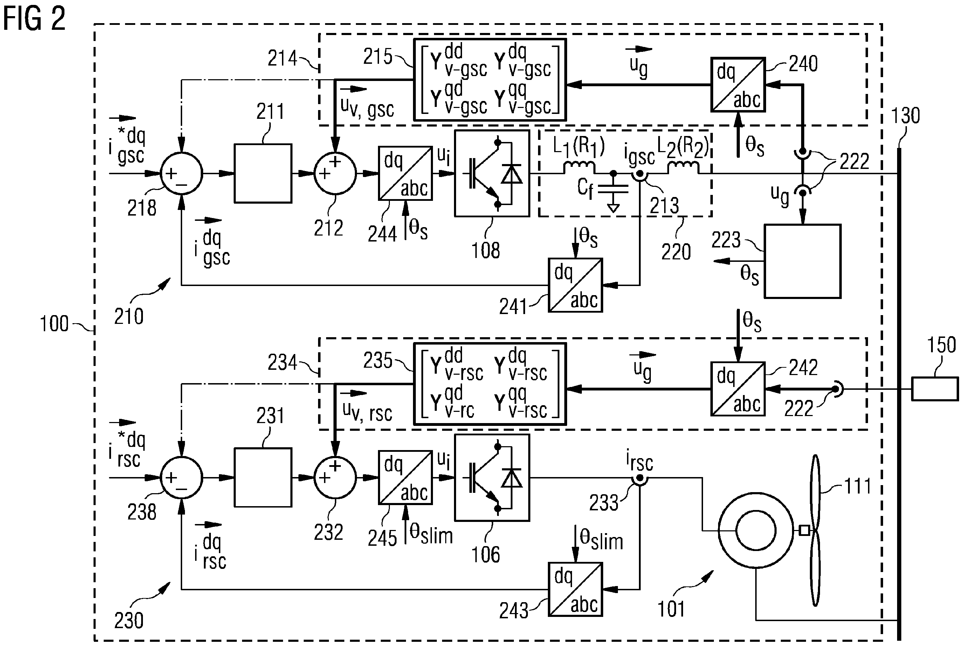

Figure 1 is a schematic drawing illustrating a power generation system 100 according to an exemplary implementation. Power generation system 100 may comprise an electrical power generator 101 of a wind turbine. The power generator 101 may for example be a wound rotor induction generator, in particular a doubly fed induction generator. The generator 101 may comprise a stator 102 with stator windings and a rotor 103 with rotor windings. The stator 102 may be electrically coupled to a power grid 150 at a point of common coupling 130 and to a grid side converter 108 of the power converter 105. The electrical power output by the power generator 101 may be a polyphase power, preferably a three-phase power. The grid side converter 108 may be electrically coupled via a DC-link 107 with a rotor side converter 106 of the power converter 105. The rotor side converter 106 may be electrically coupled with the rotor 103. The rotor 103 may be driven by a mechanically coupled aerodynamical rotor 111 (shown in figure 2) of the wind turbine. The power converter 105 may be configured to bidirectionally transfer electrical power from the rotor side to the grid side and from the grid side to the rotor side. An example for such power converter 105 may be a frequency changer and in particular an AC/DC-DC/AC converter. For example, power converters 106, 108 may be voltage source converters connected in back-to-back configuration. The grid side converter 108 may be equipped with a LCL filter 220 (shown in figure 2).

Although figure 1 shows a doubly fed induction generator topology, it should be clear that a different type of converter-interfaced topology that may furthermore implement a different type of wind turbine generator may be applied, e.g. a full converter topology using a synchronous generator.

The operation of the power converter 105 may be controlled by a control system 120 being communicatively coupled with the power converter 105. The control system 120 may comprise a memory unit 122 and a processing unit 121. Processing unit 121 may for example include a digital signal processor, an application specific integrated circuit, a field programmable gate array, a microprocessor, or the like. The memory unit 122 may include RAM, ROM, Flash Memory, a hard disk drive and the like.

When a harmonic resonance arises in the power grid 150, components electrically coupled to the power grid 150, e.g. power generation system 100, may respond on an oscillation induced by the harmonic resonance by further enhancing or at least maintaining the oscillation which may destabilize the operation of the grid-coupled components or which even may be harmful, e.g. damaging, for the components. However, this contribution to the harmonic resonance is basically due to an unfavorable actual output impedance, in particular an unfavorable reactance, of a grid-coupled component. Therefore, by modifying the actual output impedance such that a compensated output impedance of the grid-coupled component is provided, the contribution of a component to the harmonic resonance may be reduced or may even be modified such that the component has a damping response that weakens an oscillation in the power grid 150, e.g. by reducing an amplitude of the oscillation. Due to this modification of the output impedance, a stable operation may be guaranteed.

To modify the actual output impedance of the power generation system 100 in order to provide the compensated output impedance, the rotor side converter 106 and/or the grid side converter 108 may operate in an impedance compensating mode.

It should be noted that operating only one of the power converters 106, 108 in the impedance compensating mode may achieve the modification of the actual output impedance, since the output admittance of the power generation system 100, in particular when a doubly fed induction generator is comprised, may be derived from a sum of an admittance of the grid side converter 108 and an admittance of the rotor side converter 106.

Figure 2 is a schematic drawing showing the power generation system 100 and a signal flow illustrating the impedance compensating mode being performed by both the rotor side converter 106 and the grid side converter 108 according to an exemplary implementation.

Any operation shown by the signal flow in figure 2, e.g. current control 210 and/or current control 230, may be implemented by the control system 120 shown in figure 1.

The current controls 210, 230 may be implemented in synchronous reference frames. The synchronous reference frame of the grid side converter 108 may be synchronized with an angle $\theta_s$ of a voltage at the point of common coupling 130 which may be obtained by a phase-locked loop 223. An angle $\theta_{slim}$ of the synchronous reference frame for the rotor side converter 106 may be used. The angle $\theta_s$ may be a difference between the angle $\theta_s$ and angle of the rotor $\theta_r$, i.e. $\theta_{slim} = \theta_s - \theta_r$. The required Park transformations/inverse Park transformations of parameters of the control architecture are accordingly based on $\theta_s$ or $\theta_{slim}$, as shown in figure 2 by Park transformation units 240-243 and inverse Park transformation units 244, 245.

The current control 210 may control the current $i_{gsc}$ being provided by the grid side converter 108. The actual current $i_{gsc}$ output by the grid side converter 108 may be monitored by a monitoring unit 213 to generate a monitored grid side converter current $i^{dq}_{gsc}$. A current controller 211 may generate a voltage control parameter from a control error being a difference between a reference grid side converter current $i^{*dq}_{gsc}$ and the monitored current $i^{dq}_{gsc}$. The voltage control parameter output by current controller 211 may be modified at coupling point 212 by adding modification parameter $u_{v,gsc}$ to generate reference voltage $u_i$ that is to be output by the grid side converter 108. The modification parameter $u_{v,gsc}$ may be output by a virtual admittance loop 214 and may be generated based on a grid voltage $u_g$ monitored by monitoring unit 222 at the point of common coupling 130 and by applying a compensating transfer function 215 to the monitored voltage $u_g$.

Similarly, the current control 230 may control the current $i_{rsc}$ being provided by the rotor side converter 106. The actual current $i_{rsc}$ output by the rotor side converter 106 may be monitored by a monitoring unit 233 to generate a monitored rotor side converter current $i^{dq}_{rsc}$. A current controller 231 may generate a voltage control parameter from a control error being a difference between a reference rotor side converter current $i^{*dq}_{rsc}$ and the monitored current $i^{dq}_{rsc}$. The voltage control parameter output by current controller 231 may be modified at coupling point 232 by adding modification parameter $u_{v,rsc}$ to generate reference voltage $u_i$ that is to be output by the rotor side converter 106. The modification parameter $u_{v,rsc}$ may be output by a virtual admittance loop 234 and may be generated based on a grid voltage $u_g$ monitored by monitoring unit 222 at the point of common coupling 130 and by applying a compensating transfer function 235 to the monitored voltage $u_g$.

In an alternative embodiment, the output of the virtual admittance loops 214, 234 may be added to the reference currents $i^{*dq}_{gsc}$, $i^{*dq}_{rsc}$ at coupling points 218 , 238, respectively, which is indicated in figure 2 by the dashed line arrows.

It should be noted that in the example shown in figure 2 that uses coupling points 212, 232 for the entry of the output of the virtual admittance loops 214, 234, the naming "virtual admittance" is maintained, even though the virtual admittance loops 214, 234 constitute a voltage-to-voltage control loop ($u_g$ to $u_v$) in this case.

As mentioned, the virtual admittance loops 214, 234 may comprise a respective compensating transfer function 215, 235. Since the monitored grid voltage $u_g$ is a vector in the dq-frame, each of the compensating transfer functions 215, 235 may be a 4x4 matrix of transfer functions. By modifying the current controls 210, 230 using the virtual admittance loop 214 and/or the virtual admittance loop 235, respectively, the reactance of the output impedance of the power generation system 100 may be reduced and, in particular, cancelled such that the output impedance may be purely resistive at one or more conflicting resonant frequencies of the power grid 150. In other words, due to the modification by at least one of the virtual admittance loops 214, 235, for at least one conflicting resonant frequency $\omega_r$ of the power grid 150, the requirement

$$Z_o(j\omega_r) = R_o = \begin{bmatrix} R_o & 0 \\ 0 & R_0 \end{bmatrix} \qquad (1)$$

may be met, wherein $Z_o(j\omega_r)$ is the output impedance of the power generation system 100 at $\omega_r$ and $R_o$ is the desired output resistance of the desired purely resistive output impedance.

For this purpose, at least one of the compensating transfer functions 215, 235 - depending on whether only one of or both power converters 106, 108 are to be operated in the impedance compensating mode - may be suitably designed, as outlined hereinbelow with respect to two alternatives.

In the first alternative, a model-based formula may be used to derive a compensating transfer function 215, 235 that makes the output impedance for one given/predetermined specific frequency (i.e., the resonant frequency) purely resistive. A lead-lag compensator with an additional high-pass filter and low-pass filter may be designed and then discretized.

In the second alternative, a fitting algorithm, e.g. a vector fitting algorithm, may be used to derive a compensating transfer function that makes the output impedance purely resistive for a given/predetermined range or (discrete) set of frequencies. The fitting algorithm may consider plural points of a desired frequency response that are obtained by applying the model-based formula several times for each of the given/predetermined range or (discrete) set of frequencies.

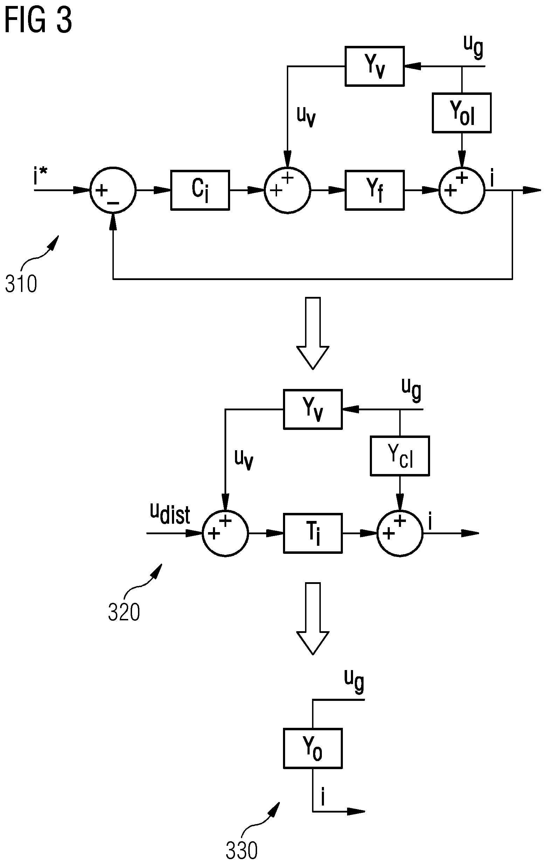

The model-based formula from which the compensating transfer function may be derived in both the first and second alternative is determined in the following under discussion of figure 3.

Figure 3 is a schematic drawing which shows, according to an exemplary implementation, a signal flow chart of a model 310 of the current control 210, 230 of one of converters 108, 106 and corresponding simplified models 320, 330 thereof, the current control 210, 230 including the admittance feedback loop 214, 234 with the compensating transfer function 215, 235.

The model represented by the signal flow chart may represent any of the rotor side converter 106 and the grid side converter 108, being grid-connected and operated in the impedance compensating mode.

Model 310 may represent the system dynamics. The transfer function $Y_f(s)$ may relate the voltage output by power converter 106, 108 with the current output by converter 106, 108. The current controller 211, 231 may be represented by the transfer function $C_i(s)$ and the admittance of the converter without any feedback path ("open-loop admittance") may be represented by the transfer function $Y_{ol}(s)$. The desired compensating transfer function 215, 235, i.e. the herein socalled virtual admittance, may be $Y_v(s)$.

The structure of model 310 may be simplified to model 320 by

$$T_i = [I + Y_f C_i]^{-1} Y_f, \qquad (2)$$

$$Y_{cl} = [I + Y_f C_i]^{-1} Y_{ol}, \qquad (3)$$

wherein $T_i(s)$ may be a closed-loop transfer function relating the output of the virtual admittance $Y_v(s)$ to the current i output by the power generation system 100 and wherein $Y_{cl}(s)$ may be the impedance of the grid-connected device in closed loop. Model 320 may additionally comprise an input $u_{dist}$ that may be used to stimulate the system to identify the transfer function $T_i(s)$.

The structure of model 320 may further be simplified to model 330 which only consists of the transfer function $Y_o$(s) representing the desired output admittance of the grid-connected power converter 106, 108 during operation. The model 320 may be simplified to model 330 by

$$Y_o = Y_{cl} + T_i Y_v \qquad (4).$$

From equation 4, the transfer function $Y_v(s)$ required to provide a purely resistive output impedance of the power generation system 105 at one given frequency $\omega_r$ may be derived as

$$Y_v(j\omega_r) = T_i^{-1}(j\omega_r)[R_o^{-1} - Y_{cl}(j\omega_r)] \qquad (5),$$

wherein

$$\boldsymbol{Y_v}(j\omega_r) = \begin{bmatrix} Y_v^{dd}(j\omega_r) & Y_v^{dq}(j\omega_r) \\ Y_v^{qd}(j\omega_r) & Y_v^{qq}(j\omega_r) \end{bmatrix} \qquad (6).$$

The desired output resistance $R_o$ of the output impedance at the frequency $\omega_r$ may be set by

$$\boldsymbol{R_o}^{-1} = \begin{bmatrix} 1/R_o & 0 \\ 0 & 1/R_o \end{bmatrix} \qquad (7).$$

Both the first and second alternative apply the requirement of eq. 5, which settles the value of the virtual admittance $\boldsymbol{Y_v}$(s) at the resonant frequency $\omega_r$. However, while the first alternative may consider only one frequency response point $\boldsymbol{Y_v}$($j\omega_r$) derived from eq. 5, the second alternative may consider plural frequency response points $\boldsymbol{Y_{v,k}}$($j\omega_{r,k}$) derived from eq. 5 based on one or more desired pure output resistances $\boldsymbol{R_{o,k}}$ at one or more desired frequencies of interest $\omega_{r,k}$ (index k refers to an iterator from 1 to n of the plural points). It is noted that the index k does not refer to 'k' resonances, but refers to the frequency points of the desired frequency response.

Regarding the first alternative, i.e. when the power generation system 100 only compensates for a single frequency, the virtual admittance $\boldsymbol{Y_v}$(s) may further be configured to not modify the DC component of the fundamental component (in order to avoid interfering with the management of active and reactive powers) and, therefore, consider an additional frequency response point of the virtual admittance $\boldsymbol{Y_v}$(0) = 0. Additionally or alternatively, to avoid high-frequency interactions, a low-pass filter may be added.

Taking into consideration the requirements may result in the following structure for the transfer functions of eq. 6:

$$Y_v(s) = (-1)^p \cdot K \cdot \frac{s/\omega_c}{s/\omega_c + 1} \cdot \frac{Ds + 1}{Dfs + 1} \cdot \frac{1}{s/\omega_o + 1} \qquad (8),$$

where $\omega_c$ is a cut-off frequency of a high-pass filter, $\omega_o$ is a cut-off frequency of a low-pass filter, and D and f are parameters of a lead-lag compensator, and K is used as module compensator. As a non-limiting example, if the frequency of interest is 500 Hz, then $\omega_o$ may be set to 1 kHz and $\omega_c$ may be set to 200 Hz. The main purpose of these filters is that the compensator mainly has effect at the frequency of interest.

Given the frequency response point, the design conditions defined by eq. 5 and eq. 6 may be noted by module and angle at frequency $\omega_r$ as

$$Y_v(j\omega_r) = A_v e^{j\phi_v} \qquad (9).$$

The parameters of the lead-lag compensator may be found in terms of the design conditions as

$$f = \frac{(1 - \sin \phi_v')}{(1 + \sin \phi_v')} \qquad (10),$$

$$D = \frac{1}{(\omega_r \sqrt{f})} \qquad (11),$$

$$K = A_v \sqrt{f} \sqrt{\left(\frac{\omega_c}{\omega_r}\right)^2 + 1} \qquad (12).$$

For simplification, angle $\Phi'_v$ may be introduced fist as

$$\phi_v' = \phi_v + \arctan\left(\frac{\omega_r}{\omega_c}\right) - \pi/2 + \arctan\left(\frac{\omega_r}{\omega_o}\right) \qquad (13).$$

Then, if -Π/2 < Φ'$_v$ < -Π/2, p=2 and then the lead-lag compensator can give Φ'$_v$. Otherwise p=1 and Φ'$_v$ should be recalculated as

$$\phi_v' = \phi_v - \arctan\left(\frac{\omega_r}{\omega_c}\right) + \pi/2 - \arctan\left(\frac{\omega_r}{\omega_o}\right) \qquad (14).$$

In this example, the lead-lag compensator is designed such that a gain at high frequencies is minimized (maximizes f). However, it should be clear that alternative designs for the lead-lag compensator may be implemented.

The transfer function $Y_v(s)$ may be transformed to the discrete-time domain by using the Tustin transformation with pre-warping at the resonant frequency $\omega_r$. This may guarantee that at the resonance frequency $\omega_r$, the frequency response in discrete time matches that of the continuous time.

Regarding the second alternative, plural frequency response points $Y_{v,k}(j\omega_{r,k})$ may be derived from eq. 5 based on one or more desired output resistances $R_{o,k}$ at one or more desired resonant frequencies $\omega_{r,k}$.

In other words, the above outlined with respect to a single desired frequency response point that results in a purely resistive output impedance at a given frequency may be extended to plural (n) desired frequency response points each of which results in a purely resistive output impedance at a respective given frequency.

Therefore the above outlined design conditions may be used n times to obtain n values of $Y_{v,k}(j\omega_{r,k})$, k=1,...,n. Then, the fitting algorithm may be used to calculate each of the transfer functions in $Y_v(s)$ that fulfills these requirements.

In addition to the frequency response points, at least one of the following additional frequency response points may be considered by the fitting performed by the fitting algorithm. First, a frequency response point with a low gain at high frequency. This may guarantee that the virtual admittance $Y_v(s)$ does not amplify high-frequency noise. Second, a frequency response point with zero gain at the system nominal frequency. This may guarantee that the virtual admittance $Y_v(s)$ is not active at the frequency of the synchronous resonance (50 Hz in the dq-frame, 0 Hz in natural coordinates).

Moreover, a low-pass filter may be added in series with the fitted virtual admittance. This may guarantee a decaying gain in the high-frequency range.

As a result, a parametric transfer functions that (approximately) fits the n points of the desired frequency response may be obtained which may be robust against a wider range of frequencies of harmonic resonances. Thus, the stability margins of the power generation system 100 may be further improved.

In a particular example, the fitting algorithm may be a vector fitting algorithm. Briefly summarized, the vector fitting algorithm may identify the system eigenvalues $\lambda_m$, residues $R_i$ and matrices D and E of the rational function approximation for each of the four independent transfer functions of $Y_v(s)$ (defined by eq. 6) in accordance with the transfer function structure

$$Y(s) \approx \sum_{i=1}^{n} \frac{R_i}{s - \lambda_m} + D + sE \qquad (15),$$

wherein n is a number of the plural points and s is the complex variable.

The order of the transfer functions may be selected depending on the accuracy of the results while trying to reduce the order of the resulting transfer function. The outcomes of the vector fitting algorithm are matrices A, B, C, D and E from which the transfer functions of the virtual admittance $Y_v(s)$ may be derived as (only the result for dd is shown)

$$Y_v^{dd}(s) = C(sI - A)^{-1}B + D + sE \qquad (16).$$

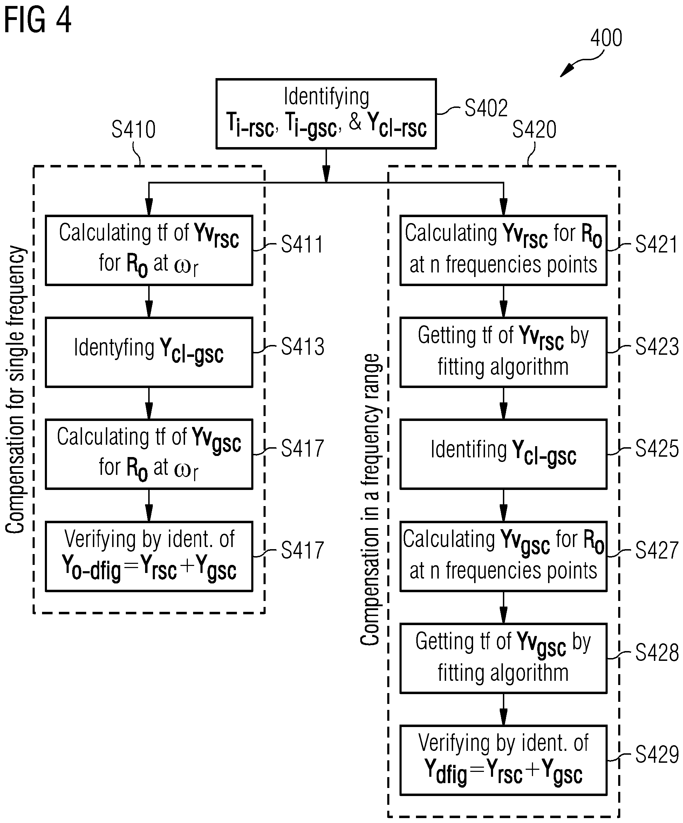

Figure 4 is a schematic flow diagram illustrating a method 400 of designing the compensating transfer functions 215, 235 according to an exemplary implementation.

It should be clear that a sequence of method steps of a method described herein is not limited to the described sequence. Further, the method is not limited to a described number of method steps. One or more steps of a described method may be substituted, extended, or not performed.

The method 400 may comprise step S402 and method steps S410 or method steps S420.

Method steps S410 may be part of designing a compensating transfer function $\mathbf{Y_v}$(s) (virtual admittance) that is configured to provide a resistive output impedance in response to a single frequency (single frequency compensation), i.e. the method steps 410 may be associated with the first alternative. Method steps S420 may be part of designing a compensating transfer function $\mathbf{Y_v}$(s) that is configured to provide a resistive output impedance in response to plural frequencies (frequency range compensation), i.e. the method steps 420 may be associated with the second alternative.

The designing may be based on a simulation model of the power grid 150 and/or the power generation system 100. The power grid 150 may be modeled as an undamped power grid, e.g. by a power source and an LC filter, as shown in figure 1. Additionally or alternatively, available hardware systems may be used.

In a step 402, the frequency response of $\mathbf{T}_{\text{i-rsc}}$ and $\mathbf{T}_{\text{i-gsc}}$ may be identified. These transfer functions may represent the current controllers in closed loop. The perturbed signals may be the entry points of the virtual admittance $\mathbf{Y_v}$ (s) in the controller (i.e., the signal $\mathbf{u_{dist}}$ shown in figure 3). The signal $\mathbf{u_{dist}}$ may be used to stimulate the system for the identification of $\mathbf{T_i}$.

In the step 402, the frequency response of $\mathbf{Y}_{\text{cl-rsc}}$ may be identified. The rotor side converter 106 may be addressed before the grid side converter 108, since rotor side controllers may affect grid side converter 108 due to the coupling between the converters introduced by a voltage control of the DC link 107. Contrarily, the grid side converter 108 may almost not affect the rotor side converter 106. The identification may be performed by disturbing the voltage of the point of common coupling 130 and by measuring the current responsive to the disturbing.

In a step S411 or steps S421 and S423, the compensating transfer function 235 ($\mathbf{Y}_{\text{v\_rsc}}$) of the rotor side converter 106 may be calculated or derived by applying eq. 5 for one or more values of $\mathbf{R}$o at one or more frequencies $\omega_r$. For compensating the output impedance at a single frequency, the transfer function $\mathbf{Y}_{\text{v-rsc}}$ may be derived from a single frequency response point (S411). For compensating the output impedance in a frequency range/at plural frequencies, the transfer function $\mathbf{Y}_{\text{v-rsc}}$ may be derived from plural frequency response points by applying a fitting algorithm (S421, S423), in particular a vector fitting algorithm.

In a step S413 or S425, the frequency response of $\mathbf{Y}_{\text{cl-gsc}}$ may be identified. Preferably, the transfer function $\mathbf{Y}_{\text{cl-gsc}}$ may be integrated into the simulation model before the identification, if it is used.

In a step S417 or steps S427 and S428, the compensating transfer function 215 ($\mathbf{Y}_{\text{v-gsc}}$) of the grid side converter 108 may be calculated or derived. The procedure may the same as for $\mathbf{Y}_{\text{v-rsc}}$ but applied to the grid side converter 108.

In a step S417 or S429, to verify that the output admittance $\mathbf{Y}_{\text{o-dfig}}$ - and thus the output impedance - of the power generation system 100 is properly tuned, an identification of the whole power generation system 100 may be performed. For this purpose, both transfer functions $\mathbf{Y}_{\text{v-gsc}}$ and $\mathbf{Y}_{\text{v-rsc}}$ may preferably be integrated in the simulation model before the identification, if the model is used.

Optionally, the method 400 may further comprise testing for different values Ro to balance between damping of the closed-loop system and control performance.

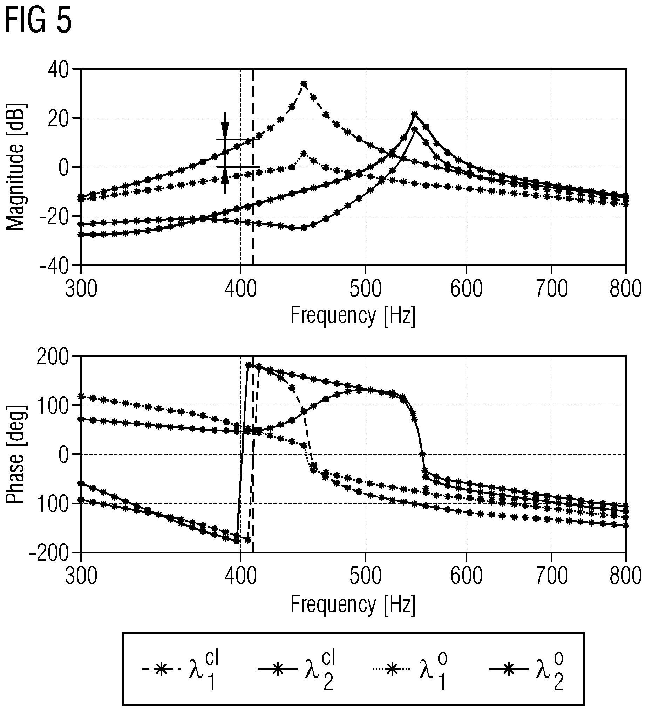

Figure 5 is a schematic diagram illustrating, according to an example, a frequency domain stability analysis of the grid-coupled power generation system 100 with a compensating transfer function $\mathbf{Y_v}$(s) designed for the single frequency compensation (i.e., the first alternative) by applying the generalized Nyquist stability criterion.

In figure 5, the open-loop eigenvalues $\lambda^{\circ}_1$, $\lambda^{\circ}_2$ of the grid-coupled power generation system 100 with both the rotor side converter 106 and the grid side converter 108 being operated in the impedance compensating mode are shown. Moreover, in figure 5, the open-loop eigenvalues $\lambda^{cl}_1$, $\lambda^{cl}_2$ of the grid-coupled power generation system 100 with the power converter 105 being conventionally operated (i.e., without a compensation of the reactance of the output impedance) are shown. It can be seen that $X^{cl}_1$ crosses -180 degrees with a gain larger than 0 dB and that $\lambda^{cl}_2$ crosses -180 degrees with a gain below 0 dB. Therefore, according to the generalized Nyquist stability criterion, the system without the virtual admittance $\mathbf{Y_v}$(s) (i.e., without the impedance compensating transfer function 215, 235) is unstable, with an oscillating frequency of approximately 420 Hz in the dq-frame. However, the eigenvalues $\lambda^{\circ}_1$, $\lambda^{\circ}_2$ never cross $\pm 180$ degrees in the frequency range of interest. Therefore, for a grid-coupled power generation system 100 with the power converter 105 being operated in impedance compensating mode, closed-loop stability may be guaranteed.

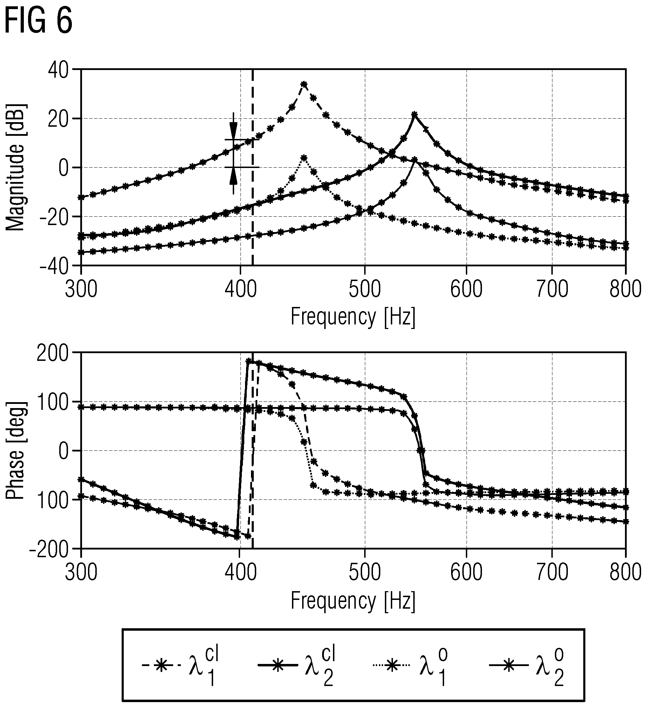

Figure 6 is a schematic diagram illustrating, according to an example, a frequency domain stability analysis of the grid-coupled power generation system 100 with a compensating transfer function $\mathbf{Y_v}$(s) designed for the frequency range compensation (i.e., the second alternative) by applying the generalized Nyquist stability criterion.

Like figure 5, also fig. 6 shows the open-loop eigenvalues. The eigenvalues $\lambda^{cl}_1$, $\lambda^{cl}_2$ are obtained for the grid-coupled power generation system 100 without the power converter 105 being operated in the impedance compensation mode, while the open-loop eigenvalues $\lambda^{\circ}_1$, $\lambda^{\circ}_2$ are obtained for the grid-coupled power generation system 100 with the power converter 105 being operated in the impedance compensation mode. The phases of $\lambda^{cl}_1$, $X^{cl}_2$ cross -180 degrees and the magnitude gain is larger than 0 dB for $\lambda^{cl}_1$. Therefore, according to the generalized Nyquist stability criterion, the system without the virtual admittance $\mathbf{Y_v}$(s) is unstable. However, when the virtual admittance $\mathbf{Y_v}$(s) (i.e., the impedance compensating transfer function 215, 235) is applied, the phase of the respective eigenvalues $\lambda^{\circ}_1$, $\lambda^{\circ}_2$ is kept between $\pm 90$ degrees in the frequency range of interest. Therefore, for a grid-coupled power generation system 100 with the power converter 105 being operated in impedance compensating mode, closed-loop stability may be guaranteed.

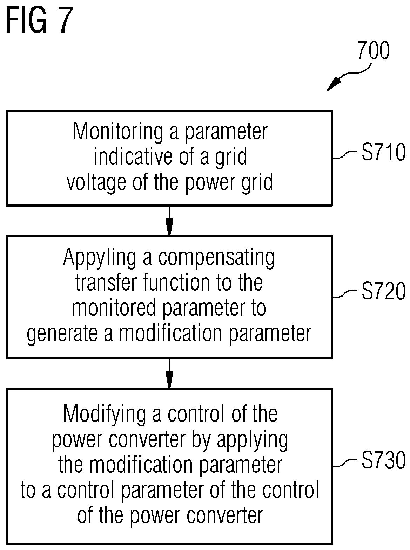

Figure 7 is a schematic flow diagram illustrating a method 700 of controlling the operation of a power converter of a power generation system, e.g. the power converter 105 of power generation system 100, according to an exemplary implementation.

The power generation system may be electrically coupled to a power grid to provide electrical power generated by the power generation system to the power grid and the power converter may control an output power of the power generation system. The method 700 may operate the power converter in an impedance compensating mode. According to a step S710, the impedance compensating mode may comprise monitoring a parameter indicative of a grid voltage of the power grid. According to a step S720, the impedance compensating mode may comprise applying a compensating transfer function to the monitored parameter to generate a modification parameter. According to a step S730, the impedance compensating mode may comprise modifying a control the power converter by applying the modification parameter to a control parameter of the control of the power converter to reduce a reactance of an output impedance of the power generation system in order to provide a compensated output impedance of the power generation system.

While specific embodiments are disclosed herein, various changes and modifications can be made without departing from the scope of the invention. The present embodiments are to be considered in all respects as illustrative and nonrestrictive, and all changes coming within the meaning and equivalency range of the appended claims are intended to be embraced therein.

**Claims**

1. A method of controlling the operation of a power converter of a power generation system,

   wherein the power generation system (100) is electrically coupled to a power grid (150) to provide electrical power generated by the power generation system (100) to the power grid (150) and wherein the power converter (105) controls an output power of the power generation system (100),
   wherein the method (700) operates the power converter (105) in an impedance compensating mode comprising:

   monitoring (S710) a parameter indicative of a grid voltage of the power grid (150),
   applying (S720) a compensating transfer function (215, 235) to the monitored parameter ($u_g$) to generate a modification parameter ($u_v$),
   modifying (S730) a control (210, 230) of the power converter by applying the modification parameter ($u_v$) to a control parameter of the control (210, 230) of the power converter (105),
   wherein the compensating transfer function (215, 235) is configured to reduce a reactance of an output impedance of the power generation system (100) to provide a compensated output impedance of the power generation system.

2. The method of claim 1, wherein the reactance of the output impedance is reduced so that the compensated output impedance is substantially only resistive.

3. The method of claim 1 or 2, wherein the power generation system (100) comprises an electrical power generator (101) of a wind turbine, in particular a wound rotor induction generator.

4. The method of claim 3, wherein the power converter (105) comprises a rotor side converter (106) configured to be electrically coupled to a rotor (103) of the generator (101), and/or

   wherein the power converter comprises a grid side converter (108) configured to be electrically coupled to the power grid (150), and
   wherein the method comprises
   operating the rotor side converter (106) and/or the grid side converter (108) in the impedance compensating mode.

5. The method of any of the preceding claims, wherein the method comprises

   deriving the compensating transfer function (215, 235) from at least one of a transfer function ($Y_f$) that relates a voltage of the power converter with an output current of the power converter, a transfer function ($C_i$) of a current controller of the power converter, a transfer function ($Y_{ol}$) indicating an open-loop admittance of the power converter, and a predetermined resistance ($R_o$) that is to be provided by the compensated output impedance at one or more frequencies, or

deriving the compensating transfer function (215, 235) from at least one of a transfer function ($T_i$) that relates a reference current of the power converter with an output current of the power converter, a transfer function ($Y_{cl}$) indicating a closed-loop admittance of the power converter, and a predetermined resistance ($R_o$) that is to be provided by the compensated output impedance at one or more frequencies, and
wherein the method preferably further comprises
identifying the transfer function ($T_i$) that relates the reference current of the power converter with the output current of the power converter, and/or
identifying the transfer function ($Y_{cl}$) indicating the closed-loop admittance of the power converter.

6. The method of claim 5, wherein the predetermined resistance ($R_o$) is to be provided by the compensated output impedance at plural frequencies and wherein the derived compensating transfer function (215, 235) is derived from the predetermined resistance, wherein the method comprises

    deriving for each frequency of the plural frequencies an intermediate compensating transfer function that is configured to reduce the reactance of the output impedance of the power converter at the frequency, and
    applying a fitting algorithm to the derived plural intermediate compensating transfer functions to derive the compensating transfer function (215, 235).

7. The method of claim 6, wherein the compensating transfer function (215, 235) is a parametric transfer function that is derived from applying the fitting algorithm to plural points of a desired frequency response of the parametric transfer function and wherein at least a part of the frequency response points is set by the intermediate compensating transfer functions, and
wherein the plural frequency response points further comprise a frequency response point with a low gain at high-frequency and/or a frequency response point with zero gain at a system nominal frequency.

8. The method of any of the preceding claims, wherein the control parameter is a reference voltage of the power converter (105), and
wherein preferably the modification parameter ($u_v$) is a voltage parameter and the modifying comprises adding the voltage parameter to the reference voltage.

9. The method of claim 8, wherein operating the power converter (105) in the impedance compensating mode further comprises
generating the reference voltage by a current controller (211, 231).

10. The method of any of claims 1-7, wherein the control parameter is a reference current ($i^{*dq}_{gsc}$, $i^{*dq}_{rsc}$) of the power converter (105), and
wherein preferably the modification parameter is a current parameter and the modifying comprises adding the current parameter to the reference current ($i^{*dq}_{gsc}$, $i^{*dq}_{rsc}$) of a current controller (211, 231) of the power converter.

11. The method of any of the preceding claims, wherein the compensating transfer function (215, 235) comprises one or more elements, wherein the one or more elements comprise at least one of a high-pass filter, a low-pass filter, a lead-lag compensator, and a module compensator.

12. A control system for controlling the operation of a power converter of a power generation system, wherein the power generation system (100) is configured to be electrically coupled to a power grid (150) to provide electrical power generated by the power generation system to the power grid and wherein the power converter (105) is configured to control an output power of the power generation system, wherein the control system (120) is configured to perform the method according to any of claims 1-11.

13. A power generation system, wherein the power generation system (100) is configured to be electrically coupled to a power grid (150) to provide electrical power generated by the power generation system to the power grid, the power generation system comprising:

    a power converter (105), wherein the power converter is configured to control an output power of the power generation system (100), and
    a control system (120) according to claim 12, wherein the control system is configured to be coupled to the power converter to control the operation of the power converter.

**14.** A computer program for controlling the operation of a power converter of a power generation system, wherein the power generation system (100) is configured to be electrically coupled to a power grid (150) to provide electrical power generated by the power generation system to the power grid and wherein the power converter (105) is configured to control an output power of the power generation system, wherein the computer program comprises control instructions which, when executed by a processing unit (121) of a control system (120) controlling the operation of the power converter, cause the processing unit to perform the method according to any of claims 1-11.

**15.** A computer-readable medium comprising instructions for controlling the operation of a power converter of a power generation system, wherein the power generation system (100) is configured to be electrically coupled to a power grid (150) to provide electrical power generated by the power generation system to the power grid and wherein the power converter (105) is configured to control an output power of the power generation system, wherein the instructions, when executed by a processing unit (121) of a control system (120) controlling the operation of a power converter, cause the processing unit to perform the method according to any of claims 1-11.

FIG 1

FIG 2

# FIG 3

FIG 4

FIG 5

FIG 6

# FIG 7

700

```
┌─────────────────────────┐
│   Monitoring a parameter │
│     indicative of a grid │      ⌐ S710
│  voltage of the power grid │
└─────────────────────────┘
            │
            ▼
┌─────────────────────────┐
│   Appyling a compensating │
│     transfer function to the │   ⌐ S720
│   monitored parameter to │
│ generate a modification parameter │
└─────────────────────────┘
            │
            ▼
┌─────────────────────────┐
│   Modifying a control of the │
│   power converter by applying │
│   the modification parameter │    ⌐ S730
│ to a control parameter of the control │
│     of the power converter │
└─────────────────────────┘
```

**EP 4 525 250 A1**

EUROPEAN SEARCH REPORT

| | | Application Number |
|---|---|---|
| | | EP 23 38 2936 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LIAO KAI ET AL: "Enhanced compensation strategy of voltage harmonics for Doubly-Fed induction generator", INTERNATIONAL JOURNAL OF ELECTRICAL POWER & ENERGY SYSTEMS, JORDAN HILL, OXFORD, GB, vol. 148, 30 December 2022 (2022-12-30), XP087275461, ISSN: 0142-0615, DOI: 10.1016/J.IJEPES.2022.108924 [retrieved on 2022-12-30] | 1-4,8,9, 11-15 | INV. H02J3/24 F03D7/04 G05F1/66 H02J3/38 |
| A | * the whole document * | 5-7,10 | |
| X | NIAN HENG ET AL: "Stability and Power Quality Enhancement Strategy for DFIG System Connected to Harmonic Grid With Parallel Compensation", IEEE TRANSACTIONS ON ENERGY CONVERSION, IEEE SERVICE CENTER, PISCATAWAY, NJ, US, vol. 34, no. 2, 1 June 2019 (2019-06-01), pages 1010-1022, XP011724585, ISSN: 0885-8969, DOI: 10.1109/TEC.2018.2866619 [retrieved on 2019-05-14] | 1-5,8,9, 11-15 | |
| A | * the whole document * | 6,7,10 | |

TECHNICAL FIELDS SEARCHED (IPC)

H02J

The present search report has been drawn up for all claims

| Place of search | Date of completion of the search | Examiner |
|---|---|---|
| Munich | 15 March 2024 | Hartmann, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

22

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **PABLO RODRIGUEZ-ORTEGA** ; **JAVIER ROLDÁN-PÉREZ** ; **MILAN PRODANOVIC**. *Virtual-Admittance Control Method for Guaranteeing Stability of Type-III Wind Turbines Connected to Poorly Damped Power Networks*